# EUROPÄISCHE PATENTSCHRIFT

(11) **EP 2 581 491 B1**
(45) Veröffentlichungstag und Bekanntmachung des Hinweises auf die Patenterteilung: **19.08.2015**
(21) Anmeldenummer: 12006647.7
(22) Anmeldetag: 21.09.2012
(51) Int. Cl.: F16C 13/00, D21F 2/00, D21F 3/10

(54) **Transfersaugwalze zum Überführen einer Materialbahn**
Transfer suction roll for transferring a material web
Rouleau aspirant de transfert pour transférer une bande de matériau

(30) Priorität: 12.10.2011 AT 14792011
(43) Veröffentlichungstag der Anmeldung: 17.04.2013
(73) Patentinhaber: Andritz AG, 8045 Graz (AT)
(72) Erfinder: Eichler, Helmut, A-8010 Graz (AT); Weigant, Harald, A-8046 Stattegg (AT); Janosch, Michael, A-8380 Jennersdorf (AT)
(74) Vertreter: Tschinder, Thomas

(56) Entgegenhaltungen:
- WO-A1-2011/045237
- DE-A1- 19 600 880
- DE-A1- 19 728 823

## Beschreibung

Den Gegenstand dieser Erfindung bildet eine Transfersaugwalze zur Überführung einer Materialbahn von einem Maschinenabschnitt zu einem nachfolgenden Maschinenabschnitt. Die Transfersaugwalze besteht aus einem gelochten Saugwalzenmantel, der über Wälzlager drehbar gelagert ist, und aus einem Saugkasten, der im Inneren der Transfersaugwalze angeordnet ist. Der Saugkasten ist an einer Längsseite zum Saugwalzenmantel hin offen und definiert über Abdichtungen eine Saugzone am gelochten Saugwalzenmantel.

Transfersaugwalzen dienen zum Überführen einer Materialbahn von einem Maschinenabschnitt zum nächsten. In Papier- und Kartonmaschinen werden Transfersaugwalzen beispielsweise zum Überführen der Bahn von der Siebpartie in die Pressenpartie und von der Pressenpartie in die Trockenpartie eingesetzt. Bei mehreren Pressen werden Transfersaugwalzen auch innerhalb der Pressenpartie verwendet.
Zum Überführen wird die Materialbahn durch Unterdruck in der Transfersaugwalze über einen gelochten Walzenmantel von einem Maschinenabschnitt abgenommen, auf dem Walzenmantel gehalten und am Ende der Unterdruckzone in den nächsten Maschinenabschnitt übergeben. Die besaugten Zonen mit Unterdruck sind die sogenannte Saugzonen. Es gibt Transfersaugwalzen mit einer oder mehreren Saugzonen.

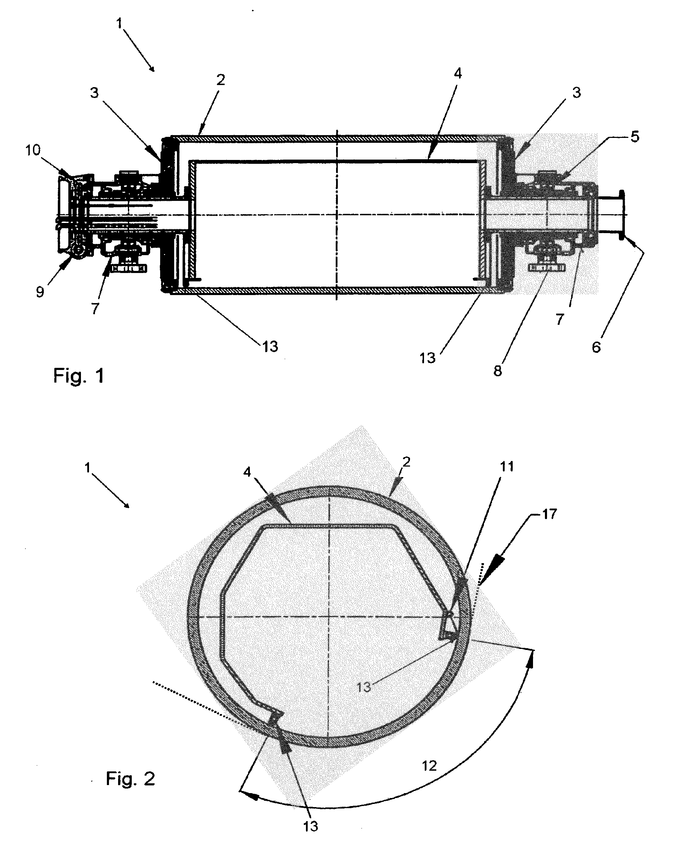

In den Fig. 1 bis Fig.3 ist eine konventionelle Transfersaugwalze 1 dargestellt. Fig. 1 zeigt dabei einen Längsschnitt und Fig. 2 einen Querschnitt durch eine herkömmliche Transfersaugwalze 1. Sie besteht im Allgemeinen aus einem rotierenden, gelochten Walzenmantel 2 an dem beidseitig Hohlzapfen 3 angeschraubt sind. Beidseitig der Transfersaugwalze 1 befinden sich die Wälzlagerungen 5 mit den Lagergehäusen 8. Die feststehenden Lagergehäuse 8 sind mit der Maschinenstuhlung verschraubt. Im Inneren der Transfersaugwalze 1 befindet sich ein feststehender Saugkasten 4. Der Saugkasten 4 weist mindestens einen Vakuumanschluss 6 für den benötigten Unterdruck auf und trägt die Abdichtungen 13 der Saugzone 12 zur nicht besaugten Zone am Walzenumfang. Im Betrieb wird der Saugwalzenmantel 2 im Bereich der Saugzone 12 von der Materialbahn 17 umschlungen.
Der Saugkasten 4 ist beidseitig in den äußeren Lagerdeckeln 7 schwenkbar gelagert. Mit einem Schwenkgetriebe bestehend aus einer Schnecke 9 und einem Schneckenrad 10 kann der gesamte Saugkasten 4 um seine Achse gedreht werden. Damit kann die Lage der Saugzone 12 den Betriebsbedingungen angepasst werden.

Die Ausführung mit besaugtem Saugkasten 4 ergibt wegen der abzuführenden Luftmengen große Querschnitte und damit entsprechend große und teure (meist geschmiedete) Hohlzapfen 3. Die Wälzlager 5 der herkömmlichen Transfersaugwalzen 1 weisen damit entsprechend große Durchmesser auf und sind damit teuer. Neben dem gebohrten Saugwalzenmantel 2 sind die Hohlzapfen 3 und Wälzlager 5 die terminkritischsten Bauteile (lange Beschaffungsdauer).

Die DE 196 00 880 A1 offenbart eine Saugwalze, die über Hohlzapfen in der Maschinenstuhlung gelagert ist. Bei diesen Hohlzapfen handelt es sich in der Regel um geschmiedete Bauteile mit langen Lieferzeiten.

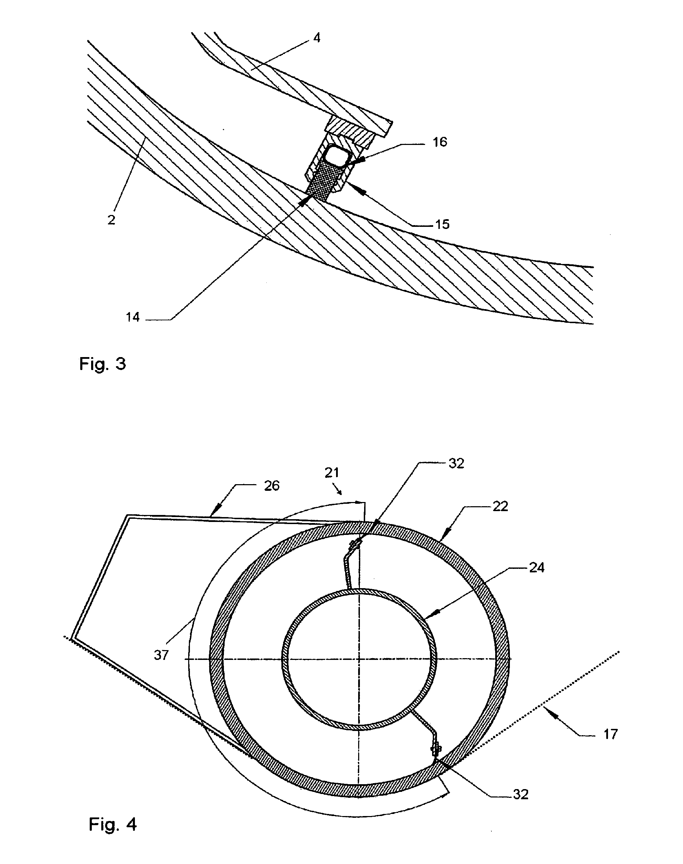

Die Abdichtung 13 herkömmlicher Saugzonen 12 erfolgt in der Regel mit Dichtleisten 14 aus Kunststoff (Fig. 3). Die Dichtleisten 14 sind in Führungsleisten 15 beweglich gelagert und werden mit aufblasbaren Druckluftschläuchen 16 aus Elastomermaterial gegen die Innenwand des gelochten Walzenmantels 2 gedrückt, um die Dichtwirkung zu gewährleisten. Die Schläuche 16 müssen von außen mit Druckluft versorgt werden.
Zur Verschleißverminderung werden die Dichtleisten 14 durch Wasserspritzrohre 11 geschmiert (Fig.2). Die Wasserspritzrohre 11 sind am Saugkasten 4 fixiert und müssen mit Wasser von außen versorgt werden.
Nach einer bestimmten Zeit sind die Dichtleisten 14 verschlissen und müssen ausgetauscht werden.

Die Verstellung der Saugzone 12 mit einem Schneckengetriebe 9,10 ist eine aufwendige Konstruktion und daher mit entsprechenden Kosten (Schnecke 9, Schneckenrad 10, Lagerungen...) verbunden.

Aufgabe der Erfindung ist eine Vereinfachung des Aufbaues der Transfersaugwalze und damit eine Kostensenkung gegenüber einer konventionellen Transfersaugwalze. Die Anzahl der verbauten Teile soll gesenkt werden.

Gelöst wird diese Aufgabe durch eine Transfersaugwalze mit den Merkmalen des Anspruchs 1. Einerseits ist am Außenumfang der erfindungsgemäßen Transfersaugwalze eine Absaughaube angeordnet, über die Luft durch den gelochten Saugwalzenmantel hindurch aus dem Saugkasten absaugbar ist. Andererseits weist der gelochte Saugwalzenmantel Enddeckel auf, in denen die Wälzlager für die drehbare Lagerung des Saugwalzenmantels integriert sind.

Dadurch entfallen die herkömmlichen Lagergehäuse und die Wälzlager können kleiner ausgeführt werden.
Die terminkritischen Teile, wie Zapfen und große Wälzlager, sind damit eingespart bzw. durch kleinere und leicht verfügbare Wälzlager ersetzbar. Als terminkritischer Teil ist nur mehr der gebohrte Saugwalzenmantel vorhanden. Die Enddeckel und Lager können beidseitig gleich ausgeführt werden, wodurch die Teileanzahl und die Kosten reduziert werden.

Der zur Besaugung benötigte Unterdruck wird also nicht über einen Vakuumanschluss am Saugkasten erzeugt, sondern über die Absaughaube, die am Außenumfang der Transfersaugwalze angeordnet ist. Über die Absaughaube wird durch den Walzenmantel hindurch die Luft abgesaugt und so der Unterdruck in der Walze erzeugt.
Da die Besaugung zur Unterdruckerzeugung über eine außen liegende Haube erfolgt und kein Vakuumanschluss am Saugkasten vorgesehen ist, entfallen die geschmiedeten Hohlzapfen mit den entsprechend großen Durchmessern, wie sie bei herkömmlichen Transfersaugwalzen üblich sind. Vorzugsweise ist der Saugkasten als feststehendes Bauteil ausgebildet. Dabei ist es günstig, wenn der Saugkasten an den beiden Enden über eine Aufnahme in der Maschinenstuhlung schwenkbar gelagert ist, sodass durch ein Verschwenken des Saugkastens die Lage der Saugzone am Saugwalzenmantel veränderbar ist. Dies ermöglicht eine besonders einfache Einstellbarkeit der Lage der Saugzone. Die Ausführung des Saugkastens ist im Vergleich zum Saugkasten einer konventionellen Transfersaugwalze erheblich vereinfacht und damit kostengünstiger.

Es ist sinnvoll, wenn die Schwenkbewegung des Saugkastens über einen Stellhebel und über Stellschrauben erfolgt. Ein aufwendiges Schwenkgetriebe kann somit entfallen.

Erfindungsgemäß werden die Abdichtungen des Saugkastens durch flexible Dichtstreifen gebildet. Dabei werden die flexiblen Dichtstreifen in Längsrichtung parallel zur Walzenachse angeordnet und mit Längenübermaß in die Walze eingebaut.
Der flexible Dichtstreifen legt sich durch das Längenübermaß an die Innenseite des Walzenmantels an und benötigt keine Anpressvorrichtung (z.B. aufblasbare Luftschläuche mit der entsprechenden Druckluftversorgung). Nach dem Einlaufen der Dichtstreifen stellt sich die benötigte Länge der Dichtstreifen von selbst ein und arbeitet dann verschleißfrei. Aufgrund des verschleißfreien Laufes entfallen Schmierspritzrohre und deren entsprechende Wasserversorgung (Kostenersparnis). Diese Dichtungsausführung ist im Vergleich zur Dichtungsausführung einer konventionellen Transfersaugwalze erheblich vereinfacht und damit kostengünstiger.

Es ist günstig, wenn der gelochte Saugwalzenmantel zumindest einen Enddeckel aufweist, der mit zumindest einem Handloch versehen ist, durch das das Walzeninnere zugänglich ist. Aufgrund der Handlöcher ist eine Sichtkontrolle der Dichtungen und des Walzeninneren durch Demontage der Handlochdeckel leicht möglich. Diese Handlöcher erleichtern auch die Montage neuer Dichtleisten. Bei konventionellen Transfersaugwalzen muss die Verschraubung vom Hohlzapfen zum Walzenmantel gelöst werden und der gesamte Saugkasten aus der Walze gezogen werden.

Dies ist sehr aufwendig und nur mit entsprechenden Werkzeugen möglich.

Im Folgenden wird ein Ausführungsbeispiel der erfindungsgemäßen Transfersaugwalze anhand von Zeichnungen beschrieben. Es zeigen:
Fig. 4 einen schematischen Querschnitt durch die erfindungsgemäße Transfersaugwalze;
Fig. 5 einen schematischen Längsschnitt durch die erfindungsgemäße Transfersaugwalze;
Fig. 6 eine Detailansicht der Abdichtung des Saugkastens gegenüber des gelochten Saugwalzenmantels;
Fig. 7 die Walzenlagerung mit dem Verschwenkmechanismus für den Saugkasten;

In Figur 4 ist die erfindungsgemäße Transfersaugwalze 21 dargestellt. Sie umfasst im Wesentlichen einen gelochten Saugwalzenmantel 22 (Rotor), einen feststehenden Saugkasten 24 im Inneren der Transfersaugwalze 21 und eine Absaughaube 26, die außen an den Saugwalzenmantel 22 anliegt. Der Saugkasten 24 definiert über die Abdichtungen 32 eine Saugzone 37. Durch die Saugzone 37 kann eine Materialbahn 17 sicher an der Walzenoberfläche gehalten werden. Die Absaughaube 26 ist über eine Absaugleitung mit einem Unterdrucksystem verbunden. Durch die Absaughaube 26 wird durch den gelochten Saugwalzenmantel 22 hindurch Luft aus dem Saugwalzeninneren abgesaugt und so der Unterdruck im Inneren der Transfersaugwalze 21 erzeugt.
Die Absaughaube 26 bedeckt eine kleinere Zone an der Walzenoberfläche als die Absaugzone 37, sodass zwischen der Absaughaube 26 und der zweiten Abdichtung 32 eine Zone verbleibt, an der der gelochte Walzenmantel 22 besaugt ist. Dieser Bereich ist der aktive Bereich für den Transfer einer Materialbahn 17. Durch Verschwenken des Saugkastens 24 und gegebenenfalls auch der Absaughaube 26, ändert sich die Position der besaugten Zone an der Walzenoberfläche. Vorzugsweise berührt die Absaughaube 26 zumindest an einer Seite den gelochten Saugwalzenmantel 22 tangential, sodass die Materialbahn 17 direkt an der Absaughaube 26 entlanglaufen kann.

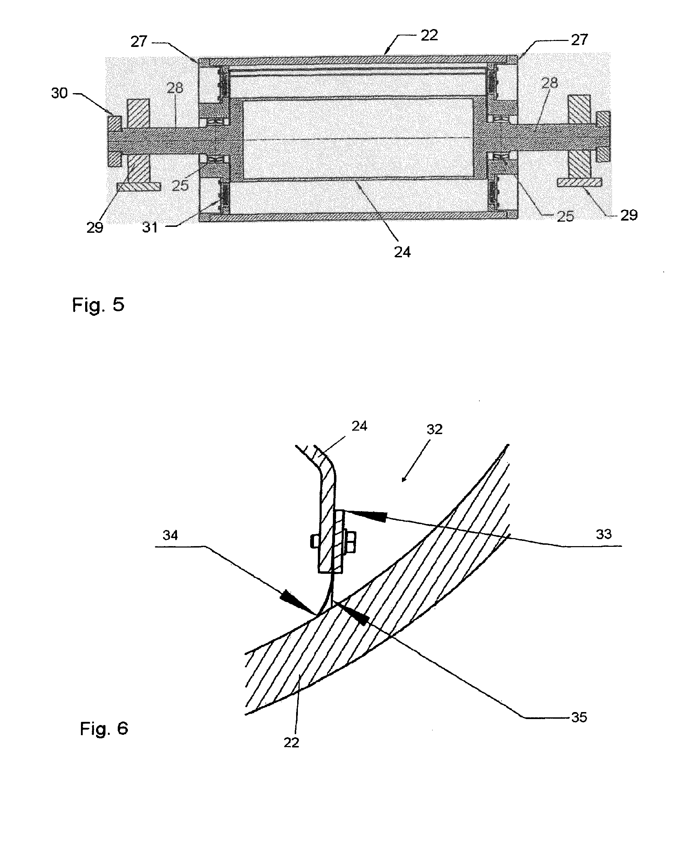

In Fig. 5 ist die Lagerung des gelochten Saugwalzenmantels 22 mit Hilfe der Wälzlager 25 dargestellt. Die Wälzlager 25 sind dabei in die Enddeckel 27 des Saugwalzenmantels 22 integriert. Außerdem weisen die Enddeckel 27 Handlöcher 31 auf, durch die das Walzeninnere zugänglich ist.
Der Saugkasten 24 ist über die Saugkastenachsen 28 in der Aufnahme 29 schwenkbar gelagert. Die Aufnahme 29 ist mit der Maschinenstuhlung verbunden. Die Verschwenkung des Saugkastens erfolgt über einen an der Saugwalzenachse 28 montierten Stellhebel 30.
Die Abdichtung 32 des Saugkastens 24 gegenüber dem gelochten Saugwalzenmantel 22 ist in Fig. 6 dargestellt. Die Abdichtung 32 erfolgt jeweils über einen flexiblen Dichtstreifen 34, 35, der in einer Dichtstreifenbefestigung 33 am Saugkasten 24 befestigt, z.B. geschraubt oder genietet, ist. Der Dichtstreifen 34 wird mit einem Übermaß in die Dichtstreifenbefestigung 33 eingebaut, dadurch wird der Dichtstreifen leicht gebogen und gegen den Walzenmantel 22 vorgespannt. Während der Einlaufphase der Transfersaugwalze 21 schleift sich dieser Dichtstreifen 34 passgenau ein. Schließlich erhält man einen Dichtstreifen 35 der über die gesamte Walzenlänge eine passgenaue Abdichtung 32 gewährleistet.

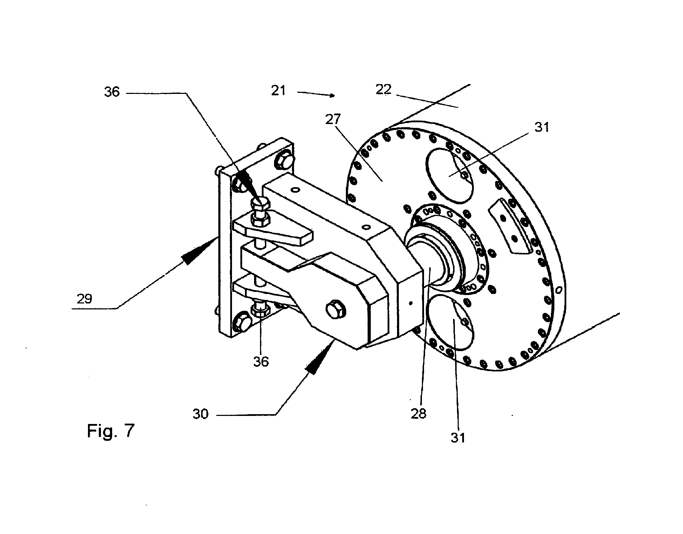

In Fig. 7 ist die Lagerung der Saugkastenachsen 28 in der Aufnahme 29 dargestellt. Durch die Stellschrauben 36 und den Stellhebel 30 kann die Saugwalzenachse 28 verdreht und somit der gesamte Saugkasten 24 verschwenkt werden. Über die Handlöcher 31 in den Enddeckeln 27 können die Dichtungen der Transfersaugwalze 21 leicht gewechselt werden.

## Patentansprüche

1. Transfersaugwalze (21) zur Überführung einer Materialbahn (17) von einem Maschinenabschnitt zu einem nachfolgenden Maschinenabschnitt mit einem gelochten Saugwalzenmantel (22), der über Wälzlager (25) drehbar gelagert ist, und mit einem Saugkasten (24), der im Inneren der Transfersaugwalze (21) angeordnet ist, wobei der Saugkasten (24) über Abdichtungen (32) eine Saugzone (37) am gelochten Saugwalzenmantel (22) definiert und wobei am Außenumfang der Transfersaugwalze (21) eine Absaughaube (26) angeordnet ist, über die Luft durch den gelochten Saugwalzenmantel (22) hindurch aus dem Saugkasten (24)absaugbar ist, **dadurch gekennzeichnet, dass** der gelochte Saugwalzenmantel (22) Enddeckel (27) aufweist, in denen die Wälzlager (25) für die drehbare Lagerung des Saugwalzenmantels (22) integriert sind, wobei die Abdichtungen (32) des Saugkastens (24) durch flexible Dichtstreifen (34, 35) gebildet werden, die mit einem Längenübermaß gefertigt sind und dass dieses Längenübermaß beim Einlaufen der Transfersaugwalze (21) durch den gelochten Saugwalzenmantel (22) abschleifbar ist, sodass dadurch eine exakte Passung der Dichtstreifen (34, 35) realisierbar ist.

2. Transfersaugwalze (21) nach Anspruch 1, **dadurch gekennzeichnet, dass** der Saugkasten (24) als feststehendes Bauteil ausgebildet ist.

3. Transfersaugwalze (21) nach Anspruch 1, **dadurch gekennzeichnet, dass** der Saugkasten (24) an den beiden Enden über eine Aufnahme (29) in einer Maschinenstuhlung schwenkbar gelagert ist, sodass durch ein Verschwenken des Saugkastens (24) die Lage der Saugzone (37) am Saugwalzenmantel (22) veränderbar ist.

4. Transfersaugwalze (21) nach Anspruch 3, **dadurch gekennzeichnet, dass** die Schwenkbewegung des Saugkastens (24) über einen Stellhebel (30) und über Stellschrauben (36) erfolgt.

5. Transfersaugwalze (21) nach einem der Ansprüche 1 bis 4, **dadurch gekennzeichnet, dass** der gelochte Saugwalzenmantel (22) zumindest einen Enddeckel (27) aufweist, der mit zumindest einem Handloch (31) versehen ist, durch das das Walzeninnere zugänglich ist.

## Claims

1. Transfer suction roll (21) for transferring a material web (17) from one machine section to a subsequent machine section, with a perforated suction roll shell (22) that is pivot-mounted in roller bearings (25) and a suction box (24) mounted inside the transfer suction roll (21), where the suction box (24) defines a suction zone (37) on the perforated suction roll shell (22) by means of seals (32) and where a suction hood (26) is arranged on the outer circumference of the transfer suction roll (21) that can be used to suck air out of the suction box (24) through the perforated suction roll shell (22), **characterized by** the perforated suction roll shell (22) having end covers (27) into which the roller bearings (25) for the pivot mounting of the suction roll shell (22) are integrated, where the seals (32) of the suction box (24) are formed by the flexible sealing strips (34, 35), which are manufactured with excess length, and by this excess length being suitable for grinding off by means of the perforated suction roll shell (22) when the transfer suction roll (21) is run in so that the sealing strips (34, 35) can thus achieve an exact fit.

2. Transfer suction roll (21) according to Claim 1, **characterized by** the suction box (24) being designed as a non-rotating component.

3. Transfer suction roll (21) according to Claim 1, **characterized by** the suction box (24) being swivel-mounted at both ends in a machine frame via a holding fixture (29) so that the position of the suction zone (37) on the suction roll shell (22) can be altered by swiveling the suction box (24).

4. Transfer suction roll (21) according to Claim 3, **characterized by** the swivel movement of the suction box (24) being operated by means of an adjusting lever (30) and adjusting screws (36).

5. Transfer suction roll (21) according to one of Claims 1 to 4, **characterized by** the perforated suction roll shell (22) having at least one end cover (27) that has at least one hand-hole (31) providing access to the inside of the roll.

## Revendications

1. Cylindre aspirant de transfert (21), pour le transfert d'une nappe en matière (17) à partir d'une partie de machine à une partie de machine suivante, avec chemise perforée (22) de cylindre aspirant, disposé de façon rotative de par son logement dans des paliers de roulement (25), et une boîte d'aspiration (24) disposée à l'intérieur du cylindre aspirant de transfert (21), où la boîte d'aspiration (24) définit, de par des dispositifs d'étanchéité (32), une zone d'aspiration (37) sur la chemise perforée (22) du cylindre aspirant, et où une hotte d'aspiration (26) est disposée sur le pourtour extérieur du cylindre aspirant de transfert (21) par laquelle de l'air peut être aspiré à partir de la boîte d'aspiration (24) à travers la chemise perforée (22) du cylindre aspirant, **caractérisé en ce que** la chemise perforée (22) du cylindre aspirant comporte des couvercles de recouvrement (27) dans lesquels les paliers de roulement (25) servant au logement de pivotement de la chemise (22) du cylindre aspirant sont intégrés, les dispositifs d'étanchéité (32) de la boîte d'aspiration (24) étant formés moyennant des bandes d'étanchéité flexibles (34, 35) qui ont été fabriquées avec une certaine démesure de longueur et que cette démesure peut être adoucie par abrasion moyennant la chemise perforée (22) du cylindre aspirant pendant le rodage du cylindre aspirant de transfert (21), permettant ainsi d'obtenir un ajustage exact des bandes d'étanchéité (34, 35).

2. Cylindre aspirant de transfert (21) selon la revendication 1, **caractérisé en ce que** la boîte d'aspiration (24) est étudiée en tant que composant non rotatif.

3. Cylindre aspirant de transfert (21) selon la revendication 1, **caractérisé en ce que** la boîte d'aspiration (24) est logée, aux deux extrémités, dans un bâti de machine de façon pivotante de par un dispositif de maintien (29), de manière à permettre un changement de la position de la zone d'aspiration (37) sur la chemise (22) du cylindre aspirant moyennant le pivotement de la boîte d'aspiration (24).

4. Cylindre aspirant de transfert (21) selon la revendication 3, **caractérisé en ce que** le mouvement de pivotement de la boîte d'aspiration (24) se fait par un levier de réglage (30) et des vis-pointeau d'arrêt (36).

5. Cylindre aspirant de transfert (21) selon l'une des revendications 1 à 4, **caractérisé en ce que** la chemise perforée (22) du cylindre aspirant comporte au moins un couvercle de recouvrement (27) qui est pourvu d'au moins un trou à main (31) par lequel l'intérieur du cylindre est accessible.
